## Europäisches Patentamt

## European Patent Office

## Office européen des brevets

(19)

(11) Veröffentlichungsnummer : **0 016 409**
**B1**

(12) **EUROPÄISCHE PATENTSCHRIFT**

(45) Veröffentlichungstag der Patentschrift :
28.04.82

(21) Anmeldenummer : **80101266.7**

(22) Anmeldetag : **12.03.80**

(51) Int. Cl.³ : **G 01 K   3/08, G 01 K   7/20**

(54) **Messgerät für die praktisch simultane Temperatur- und Temperaturdifferenzmessung.**

(30) Priorität : **17.03.79 DE 2910608**

(43) Veröffentlichungstag der Anmeldung :
**01.10.80 (Patentblatt 80/20)**

(45) Bekanntmachung des Hinweises auf die Patenterteilung : **28.04.82 Patentblatt 82/17**

(84) Benannte Vertragsstaaten :
**FR GB IT NL**

(56) Entgegenhaltungen :
**DE - A - 1 953 998**
**DE - A - 2 121 959**
**DE - A - 2 636 000**
**DE - A - 2 710 782**
**BULL. DES SCHWEIZERISCHEN ELEKTRO-TECHN. VEREINS, Band 65, Nr. 6, 23. März 1974, Zürich, CH,**
**P. SEILER : « Messmethoden und Genauigkeit von Temperatur- und Feuchtigkeitsmessungen », Seiten 435-438**

(73) Patentinhaber : **Kernforschungsanlage Jülich Gesellschaft mit beschränkter Haftung**
**Postfach 1913**
**D-5170 Jülich (DE)**

(72) Erfinder : **Herwig, Labus, Dr.**
**Petternicher Strasse 9a**
**D-5170 Jülich (DE)**

Imprimerie Jouve, 18, rue St-Denis, 75001 Paris, France

## Meßgerät für die praktisch simultane Temperatur- und Temperaturdifferenzmessung

Die Erfindung bezieht sich auf ein Meßgerät für die praktisch simultane Messung einer Temperaturdifferenz $T_2 - T_1$ und einer Absoluttemperatur $T_1$, bei dem Temperaturmeßwiderstände (R1 und R2) für die Temperaturen $T_1$ und $T_2$ und ein Referenzwiderstand (RO) in Parallelschaltung zueinander mit einer gemeinsamen Energiequelle (Q) über Zeitschalter (SI1, SI2, SIO) nacheinander während der Zeitintervalle t1, t2, tO verbunden werden.

Ein häufig auftretendes Meßproblem der Temperaturmeßtechnik besteht darin, eine kleine Temperaturdifferenz $\Delta T$ (1 °C < $\Delta T$ < 10 °C) zwischen zwei Meßpunkten mit einer Genauigkeit von einigen Prozent, d.h. im unteren Meßbereich mit einer Auflösung von einigen hundertstel Grad und gleichzeitig die Absoluttemperatur T (− 20 °C< T < 100 °C) eines der beiden Meßpunkte mit geringer Auflösung (< 1 °C) messen zu müssen. Bei solchen im folgenden kurz $\Delta T$, T-Messung genannten Messungen ist infolge des eingeschränkten Temperaturbereiches und der mäßigen Genauigkeitsanforderungen eine Linearisierung der Meßweite nicht erforderlich. $\Delta T$, T-Messungen werden in großer Zahl in der Solartechnik an Psychrometern, bei einer Gütemessung von Wärmekollektoren und Wärmetauschern etc. durchgeführt.

Industriell werden Widerstandsthermometer (z.B. Fluke 2180A) angeboten, mit denen bei Verwendung von besonders eng tolerierten ($\leq$ 0,01 %) und daher teuren Temperatur-Meßwiderständen Absoluttemperaturen auf 0,02 °C genau gemessen werden können. Mit zwei derartigen Geräten und einem dritten Gerät für die Differenzbildung der beiden Absolutmessungen läßt sich die $\Delta T$, T-Messung durchführen. Die Instrumentierung beansprucht jedoch viel Platz und ist sehr kostspielig.

Aus der DE-A 2 710 782 ist nun bereits ein Temperaturmeßgerät mit den eingangs genannten Merkmalen bekannt, bei dem die zueinander parallel liegenden Meßwiderstände mit Spannungen beaufschlagt und die dadurch fließende Ströme digital umgewandelt werden. Mit diesem Gerät werden die Temperaturwerte, wie angegeben wird, auf ± 0,1 °K genau erhalten. Eine solche Genauigkeit reicht oft nicht aus.

Ziel der Erfindung ist demgegenüber, ein kompaktes und preiswertes $\Delta T$, T-Meßgerät zu entwickeln, mit dem eine Steigerung der Empfindlichkeit und Bereitstellung eines Analogausganges für die Aufzeichnung der Temperaturdaten ermöglicht wird.

Diese Aufgabe wird gemäß der Erfindung bei einem Meßgerät der eingangs genannten Art durch die im Kennzeichen des Anspruchs 1 angegebenen Maßnahmen gelöst.

Das dabei benutzte Prinzip der Aufladung von Kondensatoren und deren Abfragung ist zwar bereits aus der DE-OS 2 63 000 bekannt, die jedoch ein Gerät zeigt, bei dem die Meßwiderstände in Reihe geschaltet sind und von einem konstanten, nicht gepulsten Strom durchflossen werden. Dadurch ergeben sich zwei Nachteile :

Bei gleicher Eigenerwärmung muß der nicht gepulste Strom kleiner (2mA) sein als der erfindungsgemäß vorgesehene gepulste Strom (bis 10mA), so daß die Meßempfindlichkeit erheblich geringer ist.

Die Anforderungen an die Qualität der Gleichtakt-Unterdrückung sind bei den in Serie geschalteten Meßwiderständen wesentlich höher als bei Parallelschaltung.

Die Ausführungsform nach Anspruch 2 bringt den Vorteil mit sich, daß die simultane $\Delta T$- und T-messung auch mit weniger eng tolerierten ($\leq$ 0,1 %) Temperatur-Meßwiderständen und vorzugsweise mit einer hohen Auflösung ($\leq$ 0,02 °C) der $\Delta T$-Messung durchgeführt werden kann.

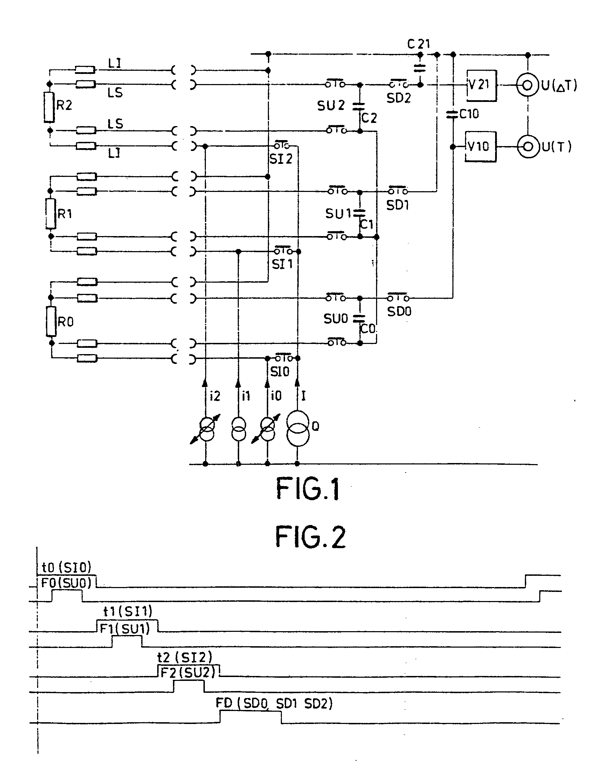

Eine erfindungsgemäße Meßanordnung wird schematisch durch Fig. 1 und 2 veranschaulicht, von denen Fig. 1 ein Schaltbild zeigt und in Fig. 2 die Schließzeiten der Schalter von Fig. 1 aufgetragen sind.

Danach werden zwei Temperaturmeßwiderstände R1, R2 und ein 100 Ω Referenzwiderstand RO nacheinander über Stromzuleitungen LI und Stromschalter SI1, SI2, SIO aus einer gemeinsamen Konstantstromquelle Q mit gleichen Stromimpulsen I während der Zeiten t1, t2, tO beaufschlagt, wobei in Zeitfenstern F1, F2, FO, die nach Beginn und vor Ende eines jeden Stromimpulses öffnen bzw. schließen, über Meßleitungen LS und Schalter SU1, SU2, SUO Kondensatoren C1, C2, CO jeweils auf die an den Widerständen R1, R2, RO abfallenden Impulsspannungen U1, U2, UO aufgeladen werden und in einem vierten, an den letzten Stromimpuls anschliessenden Zeitfenster FD mit den Schaltern SD1, SD2, SDO die Spannungsdifferenzen (U2-U1) und (U1-UO) zwischen den Kondensatoren C2 und C1 bzw. C1 und CO auf einseitig geerdete Kondensatoren C21 und C10 übertragen und mit Verstärkern V21 und V10 nachverstärkt werden.

Die Spannungen auf den Kondensatoren C21 bzw. C10 können z.B. analog nachverstärkt und/oder mit Analog/Digitalwandlern digitalisiert werden.

Bei dieser Maßanordnung ergeben sich folgende Vorteile :

1. Keine Nullpunktdriften infolge unterschiedlicher Stromdriften individueller Stromspeisungen der Meß- und Referenzwiderstände, da eine einzige Stromquelle alle Widerstände gleich versorgt.

2. Höhere Empfindlichkeit der Meßwiderstände, da gepulste Ströme bei gleicher Eigenerwärmung wesentlich höher sein können als Dauerströme.

3. Hohe Gleichtaktunterdrückung der Spannungsabfälle an den Zuleitungswiderständen durch die Aufladung der Kondensatoren C1, C2, CO über Meßleitungen LS und Schalter SD1, SD2, SDO unter Umgehung der in konventionellen Schaltungen üblichen Schwierigkeiten, bei Differenzverstärkern eine rückwirkungsfreie Offsetspannungs- und Gleichtaktunterdrückungskompensation durchführen zu müssen.

4. Sehr genaue ΔT-Erfassung ohne Umweg über zwei fehlerbehaftete Absolutmessungen durch direkte Erfassung der Spannungsdifferenz (U2-U1) zwischen den beiden Meßwiderständen R1, R2 am Eingang mit den Schaltern SD1, SD2, wobei die unter 3) genannten Schwierigkeiten mit Differenzverstärkern ebenfalls umgangen werden.

5. Einfache Nullpunktverschiebung der T-Messung nur durch Änderung des Referenzwiderstandes RO, da die T-Messung nach dem gleichen Prinzip erfolgt wie die ΔT-Messung.

6. Kein schädlicher Einfluß von Schaltzeitdifferenzen und Einschwingverhalten durch Kondensatorauf- bzw. -umladung während der Zeitfenster F1, F2, FO, FD.

Die genannten Vorteile bewirken, daß die simultane ΔT, T-Messung mit einem kompakten und preiswerten Gerät durchgeführt werden kann. Um nun mit einer solchen einfachen Vorrichtung eine hohe Auflösung der ΔT-Messung auch mit nicht sehr eng tolerierten ($< 0,1$ %) Meßwiderständen zu erreichen, sollte der Meßwiderstand R1 mit einem kleinen, festeingestellten Korrekturstrom i1 ($i1 \sim I \times 10^{-2}$) und der Meßwiderstand R2 mit einem kleinen, aber verstellbaren Korrekturstrom i2 beaufschlagt werden, wobei i2 so justiert wird, daß der ΔT-Ausgang Null anzeigt, wenn sich beide Meßwiderstände R1, R2 auf beliebiger, aber exakt gleicher Temperatur befinden.

Bei diesem Verfahren wird auf einfache Weise erreicht, daß trotz verschiedener Absolutwerte der Meßwiderstände R1, R2 bei 0 °C der Nullpunkt der ΔT-Messung bei allen Absoluttemperaturen T erhalten bleibt, wie folgende Überlegung zeigt :

Die Spannungen U1(T), U2(T) an den Meßwiderständen R1, R2 als Funktion der Absoluttemperatur T und der sie durchfließenden Ströme (I + i1) bzw. (I + i2) sind :

$$1. \quad U1(T) = (I + i1) \cdot R1(O) \cdot (1 + {}_0\!\!\int^T \alpha(T)dT)$$
$$2. \quad U2(T) = (I + i2) \cdot R2(O) \cdot (1 + {}_0\!\!\int^T \alpha(T)dT)$$

Dabei sind R1(O), R2(O) die toleranzbedingt etwas unterschiedlichen Widerstände der Meßfühler bei T = 0 °C und (α) ist der temperaturabhängige, aber bei beiden Meßfühlern gleiche Temperaturkoeffizient.

Die Forderung U1(T) ≡ U2(T) wird gemäß Gl.1 und Gl.2 dadurch erfüllt, daß gilt :

$$3. \quad i2 = I \cdot (R1(O)/R2(O)-1) - i1 \cdot R1(O)/R2(O)$$

Gleichung 3 ist unabhängig von T, d.h. der Nullpunkt der ΔT-Messung ist ebenfalls von T unabhängig. Die Wahl von zwei unipolaren Korrekturströmen i1 und i2 für die « Symmetrisierung » der Meßfühler wurde getroffen, da die Verwendung von nur einem aber bipolaren Korrekturstrom technisch aufwendiger ist.

Eine vorteilhafte Ausführungsform des Geräts besteht darin, daß der Referenzwiderstand RO ebenso wie die Meßwiderstände R1, R2 in 4-Leitertechnik an der Frontplatte anzuschliessen sind. Dies erlaubt z.B. eine schnelle Umschaltung des Nullpunktes der T-Messung mit schaltbaren Widerstandsdekaden. Statt des stabilen Referenzwiderstandes kann jedoch auch ein dritter PT-100-Widerstand angeschlossen werden, der für Absolutmessung auf 0 °C thermostatisiert wird oder mit dem eine zweite Differenzmessung durchgeführt wird.

**Ansprüche**

1. Meßgerät für die praktisch simultane Messung einer Temperaturdifferenz, $T_2$-$T_1$ und einer Absoluttemperatur $T_1$, bei dem Temperatur-Meßwiderstände (R1 und R2) für die Temperaturen $T_1$ und $T_2$ und ein Referenzwiderstand (RO) in Parallelschaltung zueinander mit einer gemeinsamen Energiequelle (Q) über Zeitschalter (SI1, SI2, SIO) nacheinander während der Zeitintervalle t1, t2, tO verbunden werden, gekennzeichnet durch die Verwendung einer Konstantstromquelle (Q) als Energiequelle, aus der die Widerstände (R1, R2, RO) mit gleichen Stromimpulsen (I) versorgt werden und durch jeweils parallel zu den einzelnen Widerständen (R1, R2, RO) liegende Kondensatoren (C1, C2, CO), die nacheinander mit Hilfe einer Zeitfensterschaltung während innerhalb der Stromimpuls-Zeitintervalle (t1, t2, tO) liegender Zeitintervalle (FO, F1 bzw. F2) über Meßleitungen (LS) mit Schaltern (SU1, SU2, SUO) auf die an den Widerständen (R1, R2, RO) abfallenden Impulsspannungen (U1, U2 und UO) aufgeladen werden ; und durch weitere Schalter (SD1, SD2 und SDO) für die Übertragung der Spannungsdifferenzen (U2-U1) bzw. (U1-UO) zwischen den Kondensatoren (C2 und C1) der Meßwiderstände (R1, R2) einerseits und den Kondensatoren (C1 und CO) des Meßwiderstands (R1) für die Temperatur T1 und des Referenzwiderstands (RO) andererseits innerhalb eines nachfolgenden Zeitintervalls (FD) auf einseitig geerdete Kondensatoren (C21 bzw. C10), deren jeweilige Spannungswerte ein Maß für $T_2$-$T_1$ bzw. $T_1$ sind.

2. Meßgerät nach Anspruch 1, gekennzeichnet durch eine Null-Justierung des Temperaturdifferenz-Ausgangs, wenn sich die Meßwiderstände (R1 und R2) auf einer beliebigen, aber exakt gleichen Temperatur befinden, welche Mittel zur Beaufschlagung des Meßwiderstandes (R1) mit einem kleinen, festeingestellten Korrekturstrom i1, der etwa zwei Größenordnungen kleiner ist als der Strom (I), und des

3

Meßwiderstandes (R2) mit einem kleinen, aber verstellbaren Korrekturstrom umfaßt.

3. Meßgerät nach Anspruch 1 oder 2, dadurch gekennzeichnet, daß der Referenzwiderstand (RO) ebenfalls wie die Meßwiderstände (R1 und R2) in 4-Leitertechnik an der Frontplatte anzuschließen ist.

**Claims**

1. Measuring instrument for the practically simultaneous measurement of a temperature difference $T_2$-$T_1$ and of an absolute temperature $T_1$, in which the temperature-measuring resistors (R1 and R2) for the temperatures $T_1$ and $T_2$ and a reference resistor (RO) in parallel connection with one another are linked to a common energy source (Q) via time switches (SI1, SI2, SIO) successively during the time intervals t1, t2, tO, characterised by the use of a constant-current source (Q) as an energy source, from which the resistors (R1, R2, RO) are supplied with identical current pulses (I), and by capacitors (C1, C2, CO) which are respectively parallel to the individual resistors (R1, R2, RO) and which are charged successively to the pulse voltages (U2, U2, UO) dropping at the resistors (R1, R2, RO), by means of the time-window circuit, during time intervals (FO, F1 and F2 respectively) lying within the current-pulse time intervals (t1, t2, tO), via measuring lines (LS) with switches (SU1, SU2, SUO) ; and by further switches (SD1, SD2 and SDO) for transmitting the voltage differences (U2-U1) and (U1-UO) respectively between the capacitors (C2 and C1) of the measuring resistors (R1, R2), on the one hand, and the capacitors (C1 and CO) of the measuring resistor (R1) for the temperature T1 and of the reference resistor (RO), on the other hand, within a following time interval (FD), to capacitors (C21 and C10 respectively) earthed at one end, the particular voltage values of which are a measure for $T_2$-$T_1$ and $T_1$ respectively.

2. Measuring instrument according to Claim 1, characterised by a zero adjustment of the temperature-difference output, when the measuring resistors (R1 and R2) are at any, but exactly the same temperature, which comprises means for subjecting the measuring resistor (R1) to a small fixed correcting current i1 which is approximately two orders of magnitude less than the current (I), and for subjecting the measuring resistor (R2) to a small, but adjustable correcting current i2.

3. Measuring instrument according to Claim 1 or 2, characterised in that the reference resistor (RO), like the measuring resistors (R1 and R2), is to be connected to the front plate in a four-wire technique.

**Revendications**

1. Appareil de mesure pour mesurer de façon pratiquement simultanée une différence de température, $T_2$-$T_1$ et une température absolue $T_1$, du type dans lequel des résistances de mesure de la température (R1 et R2) pour les températures $T_1$ et $T_2$ et une résistance de référence (RO), montées en parallèle entre elles, sont reliées, successivement et pendant des intervalles de temps t1, t2, tO, à une source d'énergie commune (Q) par l'intermédiaire de minuteries (SI1, SI2, SIO), caractérisé par la mise en œuvre d'une source de courant constant (Q) comme source d'énergie, à partir de laquelle les résistances (R1, R2, RO) sont alimentées avec les mêmes impulsions de courant (I), et de condensateurs (C1, C2, CO) respectivement parallèles aux différentes résistances (R1, R2, RO) et qui sont chargés successivement, à l'aide de circuits à créneaux temporels et pendant des intervalles de temps (FO, F1 et F2) situés dans des intervalles de temps (t1, t2, tO) des impulsions, avec les tensions impulsionnelles de chute (U1, U2, UO) aux bornes des résistances (R1, R2, RO) lesdits condensateurs étant ainsi chargés par l'intermédiaire de conducteurs de mesure (LS) à commutateurs (SU1, SU2, SUO), ainsi que par la mise en œuvre d'autres commutateurs (SD1, SD2, SDO) pour transférer les différences de tension (U2-U1) et (U1-UO) entre les condensateurs (C2 et C1) des résistances de mesure (R1, R2), d'une part, et les condensateurs (C1 et CO) de la résistance de mesure (R1) pour la température T1 et de la résistance de référence (RO), d'autre part, pendant un intervalle de temps suivant (FD), à des condensateurs (C21 et C10) unilatéralement mis à la terre et dont les valeurs respectives des tensions sont une mesure pour $T_2$-$T_1$ et $T_1$.

2. Appareil de mesure selon la revendication 1, caractérisé par un réglage zéro de la différence de température lorsque les résistances de mesure (R1 et R2) se trouvent à une température quelconque mais exactement identique, comprenant des moyens pour charger la résistance de mesure (R1) avec un courant de correction i1 faible mais fixe et qui est sensiblement inférieur d'environ deux ordres de grandeur au courant (I) et pour charger la résistance de mesure (R2) avec un courant de correction i2 faible mais réglable.

3. Appareil de mesure selon la revendication 1 ou 2, caractérisé par le fait que la résistance de référence (RO) de même que les résistances de mesure (R1 et R2) sont à relier à la plaque frontale selon la technique à réseau à quatre fils.

FIG.1

FIG.2

1